# EUROPÄISCHE PATENTSCHRIFT

(11) **EP 1 011 996 B1**
(45) Veröffentlichungstag und Bekanntmachung des Hinweises auf die Patenterteilung: **16.08.2001**
(21) Anmeldenummer: 98951321.3
(22) Anmeldetag: 27.08.1998
(51) Int. Cl.: B60J 10/08, B60J 10/00

(54) **DICHTUNGSANORDNUNG FÜR EINE TÜR EINES KRAFTFAHRZEUGES**
SEALING ASSEMBLY FOR AN AUTOMOBILE DOOR
SYSTEME DE JOINT POUR PORTIERE DE VEHICULE

(30) Priorität: 09.09.1997 DE 19739555
(43) Veröffentlichungstag der Anmeldung: 28.06.2000
(73) Patentinhaber: METZELER Automotive Profiles GmbH, D-88131 Lindau (DE)
(72) Erfinder: SOLF, Bernd, D-88069 Tettnang (DE); KRAUSE, Fritz, D-88239 Wangen (DE)
(74) Vertreter: Preissner, Nicolaus, Dipl.-Ing.
(86) Internationale Anmeldenummer: EP9805449
(87) Internationale Veröffentlichungsnummer: WO9912761

(56) Entgegenhaltungen:
- EP-A- 0 040 588
- EP-A- 0 524 447
- DE-A- 2 653 060
- DE-A- 3 340 476
- FR-A- 2 383 301
- GB-A- 2 233 378

## Beschreibung

Die Erfindung betrifft eine Dichtungsanordnung für eine Tür eines Kraftfahrzeugs, wobei eine bewegliche Fensterscheibe in einem Fensterrahmen geführt und in einen zugeordneten Fensterschacht einfahrbar ist und wobei zur Abdichtung der Fensterscheibe mindestens ein Dichtelement vorgesehen ist, das an der Tür befestigt ist, wobei die Tür einen Tür-Gußrahmen aufweist, der mit einem Türblechkasten verbunden ist.

Eine derartige Tür ist aus der DE-C-977 009 bekannt. Bei dieser Tür sind ein Innenrahmen und ein Außenrahmen vorgesehen, die beide als Spritzgußteil ausgeführt sind. Eine als Dichtelement dienende Fensterführung ist zwischen dem Innenrahmen und dem Außenrahmen aufgenommen.

Bekannte Türen von Kraftfahrzeugen, die aus gebogenen und geschweißten Aluminiumstrangpreßprofilen hergestellt sind, weisen Hinterschneidungen auf, an denen die aus elastomerem Material extrudierten Dichtelemente unproblematisch festlegbar sind. Derartige Türen sind beispielsweise in der DE-A-33 40 476, der GB-A-2 233 378 und der EP-A-O 040 588 beschrieben. Bei Fahrzeugtüren, die einen Tür-Gußrahmen aufweisen, der an einem Türblechkasten festgelegt ist, gestaltet sich jedoch die Festlegung der Dichtelemente schwierig, da an dem Tür-Gußrahmen nur wenige zur Festlegung der Dichtelemente dienenden Hinterschneidungen ausgebildet sind.

Ausgehend hiervon liegt der Erfindung die Aufgabe zugrunde, eine Dichtungsanordnung vorzuschlagen, mit der eine sichere Festlegung der Dichtelemente bei einfacher Montage möglich ist.

Zur Lösung dieser Aufgabe wird bei einer Dichtungsanordnung der eingangs genannten Art vorgeschlagen, daß das mindestens eine Dichtelement an einem Befestigungsrahmen aufgenommen ist, der in eine Aufnahme des Tür-Gußrahmens eingreift und in der Aufnahme festgelegt ist.

Mit dem erfindungsgemäßen Befestigungsrahmen ist eine sichere Festlegung des mindestens einen Dichtelementes an der Fahrzeugtür möglich. Hierbei ist der Befestigungsrahmen zwischem dem Dichtelement und dem Tür-Gußrahmen angeordnet. Die Festlegung des mindestens einen Dichtelementes erfolgt an dem Befestigungsrahmen, das wiederum an dem Tür-Gußrahmen festlegbar ist. Eine besonders einfache Montage ist dadurch möglich, daß der Befestigungsrahmen mit dem hieran angeordneten Dichtelement vormontierbar ist und als einteiliges Bauteil dann an der Fahrzeugtür montiert wird. Hierdurch ist auch eine Automatisierung der Montage möglich.

Vorteilhafte Ausgestaltungen der Erfindung sind in den Unteransprüchen aufgeführt.

Vorteilhaft ist der Befestigungsrahmen einteilig aus Kunststoff oder Metall hergestellt. Hierbei kann der Befestigungsrahmen beispielsweise aus Kunststoff als Spritzgußteil oder Blasformteil oder aus Metall als Tiefziehteil hergestellt werden.

Um eine sichere Festlegung des Dichtelementes zu gewährleisten, wird in weiterer Ausgestaltung vorgeschlagen, daß der Befestigungsrahmen mindestens eine Aufnahme für einen Befestigungsbereich des Dichtelementes aufweist.

In weiterer Ausgestaltung wird vorgeschlagen, daß der Befestigungsrahmen mittels eines Befestigungselements, insbesondere einer Schraube, Niete, Klips, Metallfeder oder dergleichen, an dem Tür-Gußrahmen festgelegt ist. Hierdurch wird eine schnelle und einfache Montage des Befestigungsrahmen an dem Tür-Gußrahmen gewährleistet.

Vorteilhaft weist der Befestigungsrahmen mindestens einen Befestigungbereich auf, an dem die Befestigungselemente angreifen.

Vorteilhaft ist der Befestigungsrahmen der Außenkontur des Tür-Gußrahmen angepaßt.

Nachfolgend wir die Erfindung anhand von Ausführungsbeispielen näher erläutert, die in schematischer Weise in der Zeichnung dargestellt ist. Hierin zeigen:
- Figur 1: eine Seitenansicht einer Fahrzeugtür mit einer erfindungsgemäßen Dichtungsanordnung;
- Figur 2: einen Vertikalschnitt gemäß der Linie II-II in Figur 1;
- Figur 3: einen Vertikalschnitt durch ein weiteres Ausführungsbeispiel der erfindungsgemäßen Dichtungsanordnung; und
- Figur 4: einen Vertikalschnitt durch ein drittes Ausführungsbeispiel der Erfindung;

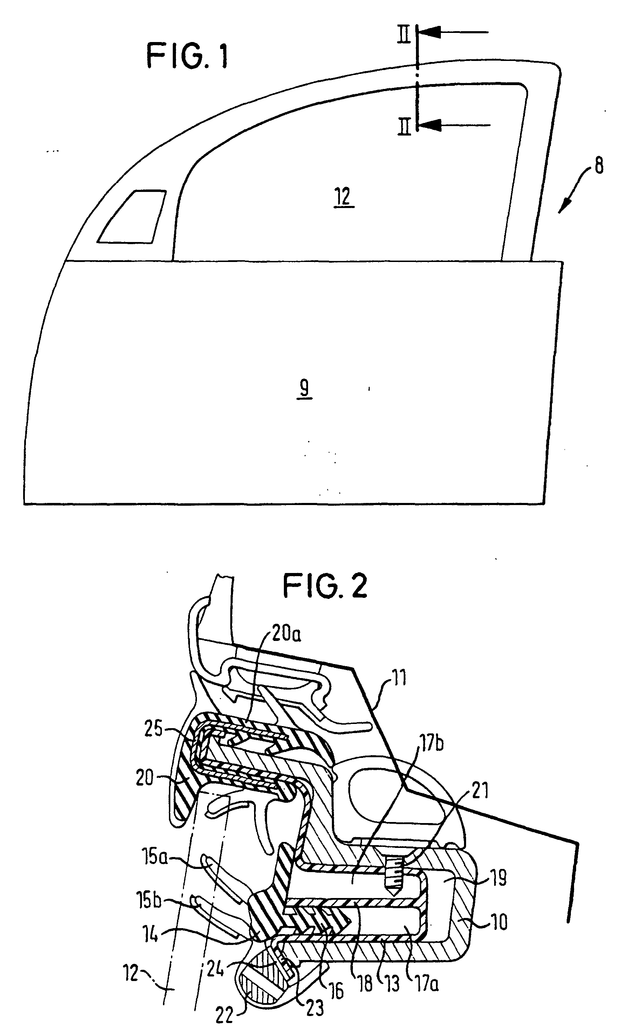

Figur 1 zeigt die Seitenansicht einer Tür 8 eines Kraftfahrzeuges. Die Tür 8 besitzt einen Tür-Gußrahmen 10, der mit einem Türblechkasten 9 verbunden ist.

Figur 2 zeigt einen Vertikalschnitt durch den Fensterrahmen der Fahrzeugtür 8 im Bereich des Daches 11 des Kraftfahrzeuges. Die Fahrzeugtür 8 weist einen Tür-Gußrahmen 10 auf, der an dem Türblechkasten 9 befestigt ist. Weiterhin besitzt die Fahrzeugtür 9 eine bewegliche Fensterscheibe 12, die an einem Fensterrahmen geführt und in einen zugeordneten Fensterschacht in dem Türblechkasten 9 einfahrbar ist.

Zur Abdichtung der beweglichen Fensterscheibe 12 sind Dichtelemente 14, 20 vorgesehen, die aus elastomerem Material extrudiert sind. Die Befestigung der Dichtelemente 14, 20 erfolgt mittels eines Befestigungsrahmens 13, der wiederum mittels Befestigungselementen 21 an dem Gußrahmen 10 befestigt ist. Der Befestigungsrahmen 13 greift in eine Aufnahme 19 des Gußrahmens ein und ist in dieser festgelegt.

An dem Befestigungsrahmen 13 sind Aufnahmeöffnungen 17a, 17b ausgebildet, die durch einen zwischenliegenden Trennsteg 18 voneinander getrennt sind. Das Dichtelement 14 weist einen Befestigungsbereich 16 auf, der in die Aufnahme 17a des Befestigungsrahmens 13 eingeführt ist. In die Aufnahme 17b des Befestigungsrahmens 13 greift das Befestigungselement 21 ein.

An dem Befestigungsrahmen 13 ist ein Befestigungsflansch 23 ausgebildet, an dem mittels eines Klebebandes 24 ein Einklemmschutzprofil 22 festgelegt ist.

Das Dichtelement 20 weist einen näherungsweise U-förmigen Befestigungsbereich 20a auf, in dem eine Metalleinlage 25 aufgenommen ist. Der Befestigungsbereich 20a umgreift einerseits den Befestigungsrahmen 13 und andererseits den Tür-Gußrahmen 10.

Die vorstehend beschriebene Dichtungsanordnung gestattet eine einfache Montage an dem Tür-Gußrahmen 10, da die Dichtelemente 14, 20 an dem Befestigungsrahmen 13 vormontierbar sind. Somit kann das vormontierte Bauteil mittels der Befestigungselemente 21 an dem Tür-Gußrahmen 10 befestigt werden. Die Montage des Befestigungsrahmens 13 erfolgt hierbei in sehr kurzer Zeit und kann auch automatisch durchgeführt werden.

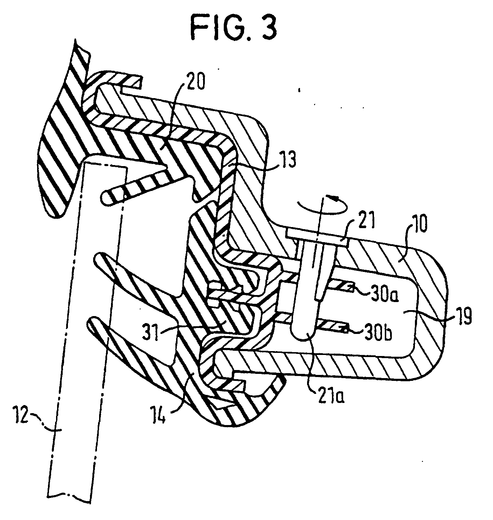

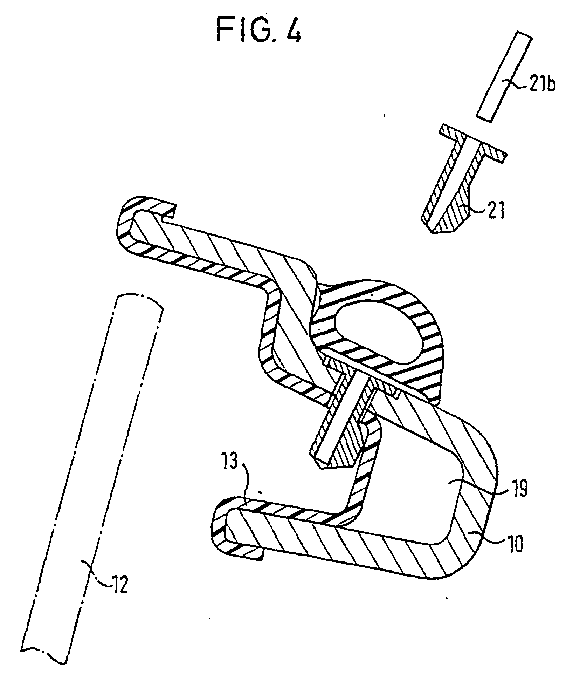

Zur Beschreibung der in den Figuren 3 und 4 dargestellten Ausführungsbeispiele werden die bereits eingeführten Bezugszeichen für gleiche und funktionsgleiche Teile verwendet.

Die in Figur3 dargestellte Dichtungsanordung weist zur Befestigung der Dichtelemente 14, 20 wiederum einen Befestigungsrahmen 13 auf, der mittels Befestigungselementen 21 an dem Tür-Gußrahmen 10 festgelegt ist. An dem als Kunststoff-Spritzgußteil ausgebildeten Befestigungsrahmen 13 sind Befestigungsbereiche 30a, 30b für das Befestigungselement 21 vorgesehen, die als beabstandete Stege ausgebildet sind. Hierbei durchdringt der Schaft 21a des stiftförmigen Befestigungselementes 21 die beiden Befestigungsbereiche 30a, 30b. Durch Drehung des Befestigungselementes 21 wird der Befestigungsrahmen 13 mit dem Tür-Gußrahmen 10 dauerhaft verspannt. An der gegenüberliegenden Seite weist der Befestigungsrahmen 13 einen Befestigungsflansch 31 auf, der der Festlegung des Dichtelementes 14 an dem Befestigungsrahmen 13 dient.

Bei dem Ausführungsbeispiel gemäß Figur 4 erfolgt die Festlegung des Befestigungsrahmens 13 an dem Tür-Gußrahmen 10 mittels mehrerer Befestigungselemente 21, die in entsprechende Öffnungen an dem Tür-Gußrahmen einführbar sind. Die Befestigungselemente 21 weisen jeweils einen Spreizstift 21b auf, der in den Grundkörper einführbar ist.

Allen vorstehend beschriebenen Ausführungsbeispielen ist gemeinsam, daß der Befestigungsrahmen 13 mit den hieran festgelegten Dichtelementen 14, 20 eine vormontierbare Baueinheit darstellt. Diese kann dann mit kurzen Montagezeiten beim Automobilhersteller an den Tür-Gußrahmen der Fahrzeugtür in einfacher Weise montiert werden. Die vormontierbare Baueinheit führt auch dazu, daß beim Automobilhersteller der Logistikaufwand reduziert ist.

## Patentansprüche

1. Dichtungsanordnung für eine Tür (8) eines Kraftfahrzeugs, wobei eine bewegliche Fensterscheibe (12) in einem Fensterrahmen geführt und in einen zugeordneten Fensterschacht einfahrbar ist und wobei zur Abdichtung der Fensterscheibe (12) mindestens ein Dichtelement (14, 20) vorgesehen ist, das an der Tür (8) befestigt ist, dadurch gekennzeichnet, daß die Tür (8) einen Tür-Gußrahmen (10) aufweist, der mit einem Türblechkasten (9) verbunden ist und daß das mindestens eine Dichtelement (14, 20) an einem Befestigungsrahmen (13) aufgenommen ist, der in eine Aufnahme (19) des Tür-Gußrahmens (10) eingreift und in der Aufnahme (19) festgelegt ist.

2. Dichtungsanordnung nach Anspruch 1, dadurch gekennzeichnet, daß der Befestigungsrahmen (13) aus Kunststoff oder Metall hergestellt ist.

3. Dichtungsanordnung nach Anspruch 1 oder 2, dadurch gekennzeichnet, daß der Befestigungsrahmen (13) mindestens eine Aufnahme (17a) für einen Befestigungsbereich (16) des Dichtelementes (14) aufweist.

4. Dichtungsanordnung nach einem der Ansprüche 1 bis 3, dadurch gekennzeichnet, daß der Befestigungsrahmen (13) mittels mindestens einem Befestigungselement (21), insbesondere einer Schraube, Niete, Klips, Metallfeder oder dergleichen, an dem Tür-Gußrahmen (10) festgelegt ist.

5. Dichtungsanordnung nach einem der Ansprüche 1 bis 4, dadurch gekennzeichnet, daß der Befestigungsrahmen (13) mindestens einen Befestigungsbereich (30a, 30b) aufweist, an dem die Befestigungselemente (21) angreifen.

6. Dichtungsanordnung nach einem der Ansprüche 1 bis 5, dadurch gekennzeichnet, daß der Befestigungsrahmen (13) der Außenkontur des Tür-Gußrahmens (10) angepaßt ist.

## Claims

1. A weatherseal assembly for a motor vehicle door (8), wherein a movable window pane (12) is guided in a window frame and retractable in an assigned door cavity and wherein at least one weatherseal (14, 20) secured to said door (8) is provided for sealing said window pane (12), characterized in that said door (8) comprises a cast door frame (10) joined to a door panel box (9) and that at least one weatherseal (14, 20) is received by a fastening frame (13) engaging a receptacle (19) of said cast door frame (10) and defined in said receptacle (19).

2. The weatherseal assembly as set forth in claim 1, characterized in that said fastening frame (13) is made of plastics or metal.

3. The weatherseal assembly as set forth in claim 1 or 2, characterized in that said fastening frame (13) comprises at least one receptacle (17a) for a fastening portion (16) of said weatherseal (14).

4. The weatherseal assembly as set forth in any of the claims 1 to 3, characterized in that said fastening frame (13) is defined by means of at least one fastener element (21), more particularly a screw, rivet, clip-fastener, metal spring or the like to said cast door frame (10).

5. The weatherseal assembly as set forth in any of the claims 1 to 4, characterized in that fastening frame (13) comprises at least one fastening portion (30a, 30b) engaged by said fastener elements (21).

6. The weatherseal assembly as set forth in any of the claims 1 to 5, characterized in that said fastening frame (13) is adapted to the outer contour of said cast door frame (10).

## Revendications

1. Système de joint d'étanchéité pour une portière (8) d'un véhicule automobile, dans laquelle une vitre (12) est guidée mobile dans un cadre de vitre et rétractable dans un puits de vitre associé, et dans lequel est prévu au moins un élément d'étanchéité (14, 20) pour étancher la vitre (12), lequel est fixé sur la portière (8), caractérisé en ce que la portière comprend un cadre de portière en fonte (10) qui est relié à un caisson de portière en tôle (9), et en ce que ledit au moins un élément d'étanchéité (14, 20) est logé sur un cadre de fixation (13) qui s'engage dans un logement (19) du cadre de portière en fonte (10) et qui est fixé dans le logement (19).

2. Système de joint d'étanchéité selon la revendication 1, caractérisé en ce que le cadre de fixation (13) est réalisé en matière plastique ou en métal.

3. Système de joint d'étanchéité selon l'une ou l'autre des revendications 1 et 2, caractérisé en ce que le cadre de fixation (13) comprend au moins un logement (17a) pour une zone de fixation (16) de l'élément d'étanchéité (14).

4. Système de joint d'étanchéité selon l'une quelconque des revendications 1 à 3, caractérisé en ce que le cadre de fixation (13) est fixé sur le cadre de portière en fonte (10) au moyen d'un élément de fixation (21), en particulier au moyen d'au moins une vis, un rivet, une pince, un ressort métallique ou similaires.

5. Système de joint d'étanchéité selon l'une quelconque des revendications 1 à 4, caractérisé en ce que le cadre de fixation (13) comprend au moins une zone de fixation (30a, 30b) attaquée par les éléments de fixation (21).

6. Système de joint d'étanchéité selon l'une quelconque des revendications 1 à 5, caractérisé en ce que le cadre de fixation (13) est adapté au contour extérieur du cadre de portière en fonte (10).
